# EUROPÄISCHE PATENTANMELDUNG

(11) **EP 1 574 984 A2**
(43) Veröffentlichungstag der Anmeldung: **14.09.2005**
(21) Anmeldenummer: 05001634.4
(22) Anmeldetag: 27.01.2005
(51) Int. Cl.: G06K 7/00

(54) **Kontaktiervorrichtung für eine Chipkarte, insbesondere für eine SIM-Karte**

(30) Priorität: 12.03.2004 DE 102004012621
(71) Anmelder: Lumberg Connect GmbH & Co. KG, 58579 Schalksmühle (DE)
(72) Erfinder: Richter, Michael, 58579 Schalksmühle (DE)
(74) Vertreter: Ostriga, Sonnet, Wirths & Roche

(57) **Zusammenfassung**

Dargestellt und beschrieben ist eine Kontaktiervorrichtung für eine Chipkarte, insbesondere für eine SIM-Karte zur Verwendung in Mobiltelefonen, mit einem Kontaktträger aus Kunststoff, der mit Leitern einer im Gerät vorgesehenen Leiterplatte verbindbare Kontakte trägt, sowie mit einem mit dem Kontaktträger schwenkbar verbundenen metallischen Deckel. Erfindungsgemäß sind am Deckel im wesentlichen U-förmige Lagerschalen werkstoffeinheitlich-stoffschlüssig angeformt sind, die mit korrespondierenden Lagerzapfen des Kontaktträgers Schwenklager bildend zusammenwirken. Die Lagerschalen sind aus dem Blech des Deckels ausgestanzt. Die Lagerzapfen sind dem Kontaktträger werkstoffeinheitlich-stoffschlüssig angeformt, insbes. angespritzt. Bei den Lagerschalen handelt es sich um sogenannte offene Lager. Der Umfangswinkel der Lagerschalen beträgt allenfalls etwas mehr als 180°, kann aber auch leicht darunter liegen. Der Deckel lässt sich mit dem Kontaktträger durch Aufrasten der Lagerschalen auf die kontaktträgerseitigen Zapfen mit dem Kontaktträger verbinden. Beträgt der Umfangswinkel der Lagerschalen 180° oder geringfügig weniger, erfolgt die Montage des Deckels durch einfaches Aufschieben der Lagerschalen auf die Lagerzapfen. Im montierten Zustand wird der Deckel dann im Scharnierbereich mit der äußeren Fläche der Lagerschale durch die Leiterplatte abgestützt, die somit das Gegenlager für die äußere Lagerschale darstellt.

## Beschreibung

Die Erfindung bezieht sich auf eine Kontaktiervorrichtung für eine Chipkarte, insbesondere für eine in Mobiltelefonen zu verwendende SIM-Karte nach dem Oberbegriff des Anspruchs 1. Solche Kontaktiervorrichtungen mit schwenkbarem Deckel sind in zahlreichen Ausführungen in Gebrauch und daher bekannt.

Eine Kontaktiervorrichtung, die in der Patentliteratur häufig auch unzutreffend mit "Chipkarten-Leser", "SIM-Card-Reader" od.dgl. bezeichnet wird, dient zur Halterung und Bereitstellung der elektrischen Kontaktierung der Kontakte einer Chip- oder SIM-Karte (SIM = subscriber identity module) mit Leiterbahnen eines Schaltungsträgers wie insbesondere einer Leiterplatte, die in einem elektronischen Gerät, z.B. einem Mobiltelefon untergebracht ist.

Eine solche bekannte Kontaktiervorrichtung umfasst einen im wesentlichen flachrechteckigen Kontaktträger aus Kunststoff sowie einen damit schwenkbar verbundenen Deckel, der insbesondere aus Metall oder metallisiertem Kunststoff besteht. In der Regel weist der Deckel, namentlich durch geeignete Ausformung seiner Längsränder, einen Einschub für die SIM-Karte auf, die nach dem Einführen in den Deckel durch Schwenken des Deckels mit den Kontakten im Kontaktträger kontaktiert wird.

Im Rahmen der fortlaufenden Miniaturisierung von elektronischen Geräten wie insbesondere Mobiltelefonen sind auch diese Kontaktiervorrichtungen ständig kleiner bauend auszulegen.

Es ist deshalb eine Aufgabe der Erfindung, eine einfach gestaltete und robuste Kontaktiervorrichtung zur Verfügung zu stellen. Ferner soll ihr Umriss vom Umriss der Chipkarte oder SIM-Karte allenfalls unwesentlich abweichen. Außerdem soll bei einfacher konstruktiver Gestaltung der Kontaktiervorrichtung der Deckel so am Kontaktträger angelenkt sein, dass weder der Kontaktträger noch der Deckel beim Öffnen des Deckels über einen bestimmten Punkt hinaus beschädigt werden können. Ein weiterer Aspekt der Erfindung besteht darin, in die Kontaktiervorrichtung eine optimale Massekontaktierung (ESD-Abgriff) (ESD = Electro Static Discharge) zu integrieren.

Eine einfach und robust gestaltete Kontaktiervorrichtung ist mit den Merkmalen des Anspruchs geschaffen und insbesondere dadurch gekennzeichnet, dass am Deckel im wesentlichen U-förmige Lagerschalen werkstoffeinheitlich-stoffschlüssig angeformt sind, die mit korrespondierenden Lagerzapfen des Kontaktträgers Schwenklager bildend zusammenwirken.

Die Lagerschalen sind zweckmäßig aus dem Blech des Deckels ausgestanzt, während die Lagerzapfen dem Kontaktträger werkstoffeinheitlich-stoffschlüssig angeformt, insbes. angespritzt sind. Im Sinne der gewünschten Miniaturisierung ist es vorteilhaft, wenn entsprechend einem weiteren Merkmal der Erfindung die Lagezapfen an den Längsseiten des Kontaktträgers nach außen weisend angeordnet sind.

Diese und wesentliche weitere Merkmale der Erfindung sind in den sonstigen Unteransprüchen angegeben und auch der nachfolgenden ausführlichen Beschreibung und den beiliegenden Zeichnungen zu entnehmen. Die Zeichnungen stellen Ausführungsbeispiele der Erfindung dar und zeigen:
- Fig. 1: eine erfindungsgemäße Kontaktiervorrichtung mit geschlossenem Deckel in einer perspektivischen Ansicht,
- Fig. 2: eine Seitenansicht auf die Kontaktiervorrichtung nach Fig. 1,
- Fig. 3: eine Aufsicht auf den geschlossenen Deckel der Kontaktiervorrichtung,
- Fig. 4: eine Stirnansicht entsprechend dem Ansichtspfeil IV in Fig. 3,
- Fig. 5: eine der Fig. 1 entsprechende Darstellung, jedoch mit geöffnetem Deckel,

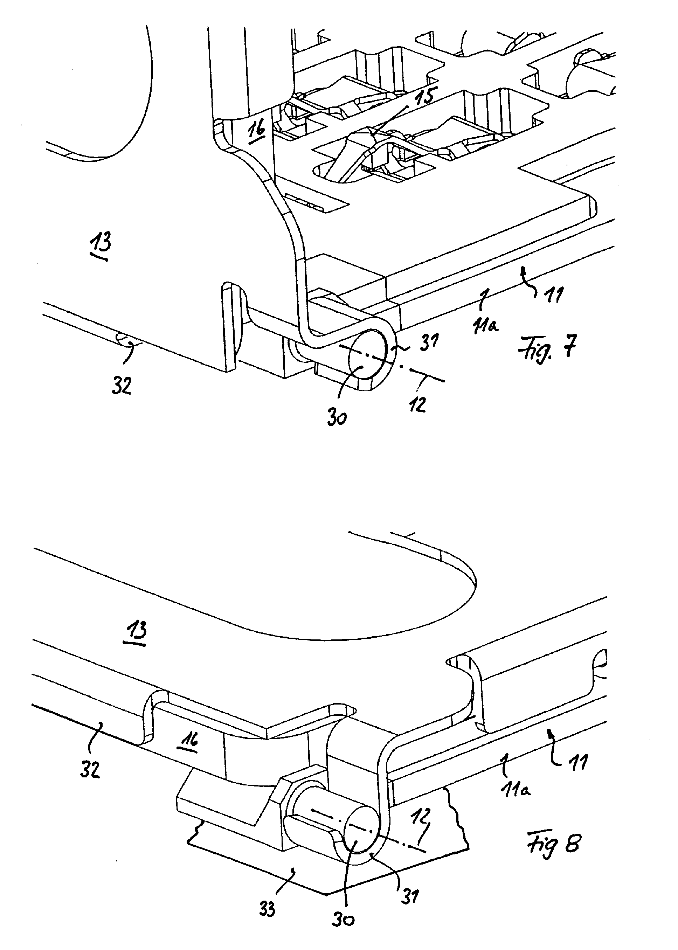

- Fig. 6: eine Seitenansicht der Kontaktiervorrichtung nach Fig. 5,
- Fig. 7: eine vergrößerte Ausschnittsdarstellung eines Anlenkbereichs des Deckels am Kontaktträger bei geöffnetem Deckel, und
- Fig. 8: eine Fig. 7 entsprechende Darstellung, jedoch bei geschlossenem Deckel,
- Fig.9: eine etwa Fig. 8 entsprechende Darstellung einer Kontaktiervorrichtung mit integriertem ESD-Abgriff, und
- Fig. 10: eine etwa Fig. 7 entsprechende Darstellung einer Kontaktiervorrichtung mit einem integrierten ESD-Abgriff gemäß einer zweiten Ausführungsform.

In den Figuren ist eine Kontaktiervorrichtung für Chipkarten, insbesondere SIM-Karten allgemein mit der Bezugsziffer 10 bezeichnet. Die wesentlichen Teile der Kontaktiervorrichtung sind ein flachrechteckiger, aus Kunststoff bestehender Kontaktträger 11 und ein damit über eine Schwenkachse 12 beweglich verbundener Deckel 13.

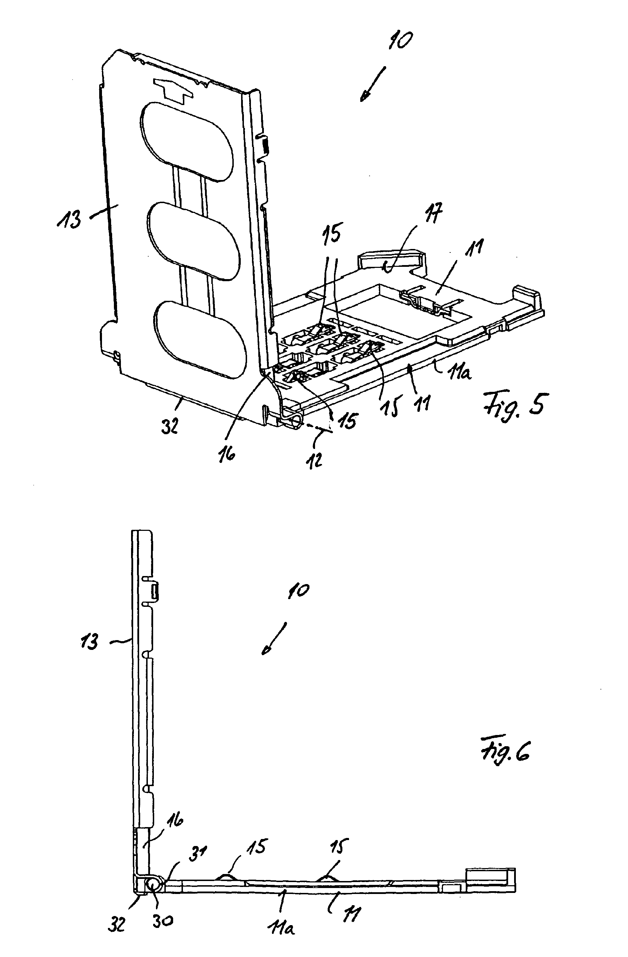

Wie insbesondere Fig. 5 zeigt, sind im Kontaktträger 11 Kontakte 15 angeordnet, sogenannte Lesekontakte, die einerseits elektrisch leitend mit einer Leiterplatte 33 (s. Fig. 8) verbunden sind und andererseits die Kontaktflächen der Chipkarte 16 kontaktieren. An einem Schmalende des Kontaktträgers 11 befindet sich eine schräg gestellte Fläche 17, die mit einer entsprechenden Eckfase, wie sie bei SIM-Karten allgemein bekannt sind, korrespondiert und so eine Codierung zum lagegerecht unverwechselbaren Einlegen der SIM-Karte 16 in den Kontaktträger 11 ermöglicht.

Wie alle Figuren erkennen lassen, befindet sich die Schwenkachse 12 an einer Schmalseite des Kontaktträgers 11, so dass der Deckel 13 über eine seiner beiden kurzen Seiten geschwenkt wird.

Die Schwenkachse 12 ist körperlich realisiert durch zwei vom Kontaktträger 11 an dessen Längsseiten nach außen weisenden Lagerzapfen 30, die werkstoffeinheitlich-stoffschlüssig am Kontaktträger 11 angespritzt sind, und damit korrespondierenden im wesentlichen U-förmigen Lagerschalen 31, die werkstoffeinheitlich-stoffschlüssig am Deckel 13 angeformt sind.

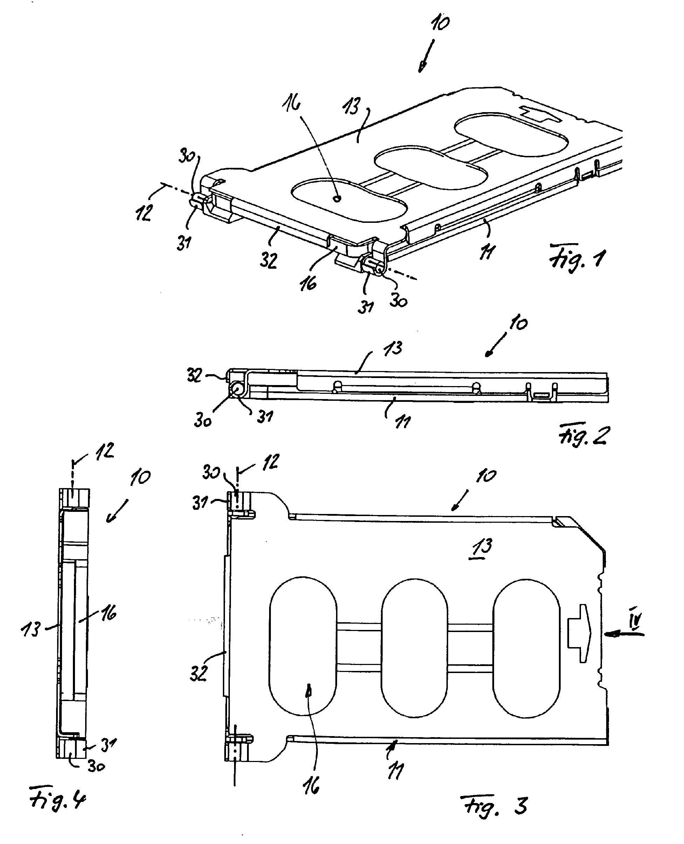

Wie insbesondere die Fig. 1 und 5 sowie 7 und 8 zeigen, befinden sich die Lagerschalen außerhalb der mit 11a bezeichneten Längsränder des Kontaktträgers 11. Andererseits sind die Schwenklager 30/31 räumlich innerhalb der Länge untergebracht, die die Chipkarte 16 beansprucht. Das bedeutet, dass die Kontaktiervorrichtung - abgesehen von einer mit 32 bezeichneten Abkantung am gelenkseitigen Schmalrand des Deckels 13 sowie im Bereich der Codierschräge 17 und an dem dieser gegenüberliegenden Rand des Kontaktträgers 11 praktisch nicht länger ist als eine Chip- bzw. SIM-Karte.

Bei den Lagerschalen 31 handelt es sich wie ersichtlich um sogenannte offene Lager. Der Umfangswinkel der Lagerschale 31 beträgt allenfalls etwas mehr als 180°, kann aber auch leicht darunter liegen. Wie insbesondere aus den Fig. 7 und 8 erkennbar ist, lässt sich der Deckel 13 mit dem Kontaktträger 11 somit, wenn der Umfangswinkel der Lagerschale 31 über 180° liegt, durch Aufrasten der Lagerschalen 31 auf die kontaktträgerseitigen Zapfen 30 mit dem Kontaktträger 11 verbinden.

Beträgt, wie beim dargestellten bevorzugten Ausführungsbeispiel der Umfangswinkel der Lagerschale 31 180° oder geringfügig weniger, erfolgt die Montage des Deckels 13 in der in Fig. 7 gezeigten Deckelstellung 90° zur Leiterplatte 33 durch einfaches Aufschieben der Lagerschalen 31 auf die Lagerzapfen 30. Im montierten, d.h. auf der Leiterplatte 33 aufgelöteten Zustand wird der Deckel 13 dann im Scharnierbereich 30/31 mit der äußeren Fläche der Lagerschale 31 durch die in Fig. 8 angedeutete Leiterplatte 33 abgestützt. Die Leiterplatte 33 stellt somit das Gegenlager für die äußere Lagerschale 31 dar.

Durch die Auslegung des Schamiers 30/31 mit Gelenkachse 12 wird beim Überschreiten des zulässigen Öffnungswinkels verhindert, dass Deckel 13 und/oder Kontaktträger 11 beschädigt werden, weil die Verbindung selbsttätig gelöst wird (Überlastschutz).

Der Anschlag für die SIM-Karte wird durch die am Deckel 13 vorgesehene Abkantung 32 erzielt, die beim Öffnen des Deckels über einen Winkel von ca. 70° mit der Leiterplatte 33 kollidiert. Durch die Kräfte, die dadurch entstehen, werden die Lagerschalen 31 im elastischen Bereich leicht aufgeweitet und ohne Zerstörung bzw. Abbrechen der Zapfen 30 das Lösen des Deckels 13 bei Überbelastung ermöglicht. Das Montieren des Deckels 13 unter Aufweitung der Lagerschale 31 stellt die funktionsfähige Kontaktiervorrichtung her.

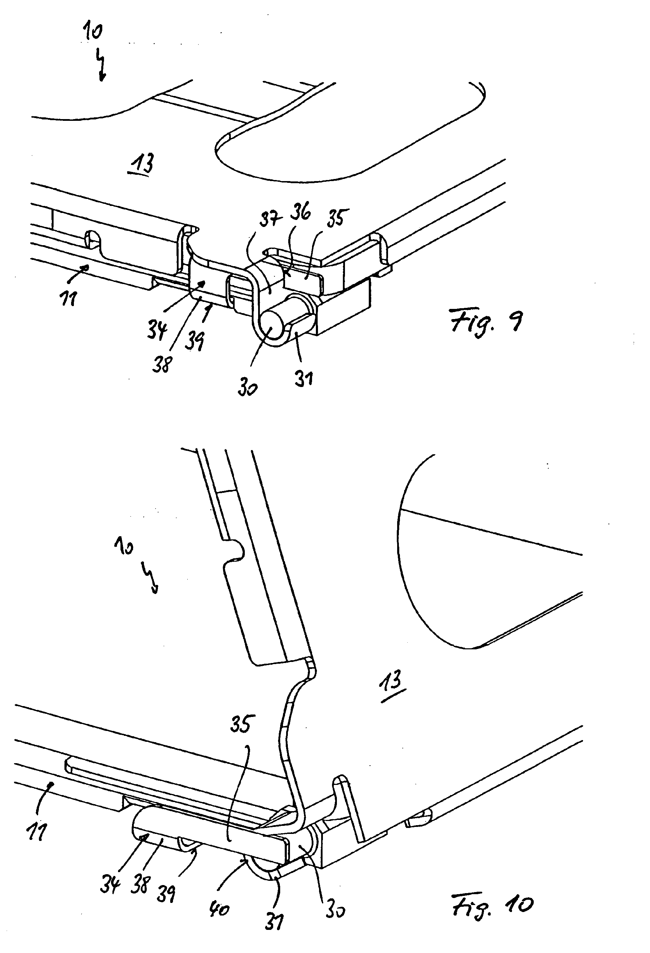

Des weiteren befasst sich die Erfindung mit einer einfachen Massekontaktierung. Dies wird nachfolgend anhand der Fig. 9 und 10 beschrieben. Auf den Stanzflächen, d.h. Stimflächen, der Lagerschalen 31 besteht die Möglichkeit, mit einem Federelement einen ESD-Abgriff zu platzieren. Diese Stelle ist besonders vorteilhaft, weil sie ihre Lage durch das Öffnen des Deckels 13 praktisch nicht verändert und daher mit einem recht einfachen Federelement gut angegriffen werden kann.

Die Massekontaktierung kann an dem Scharnier 30/31 unabhängig von dem Öffnungswinkel des Deckels 13 sichergestellt werden. Ein besonderer Vorteil besteht darin, dass, wenn eine zweite Person eine Chipkarte 16 in ein Telefon steckt, welches eine durch die erste Person geöffnete Kontaktiervorrichtung aufweist, Beschädigungen durch elektrostatische Überschläge vermieden werden.

In Fig. 9 ist ein als Blattfeder 34 ausgeführtes Federelements gezeigt, dessen Blattfederschenkel 35 an der inneren Stanzkante 36 der zur Lagerschale 31 hinführenden ausgestanzten Zunge 37 schleift. Die Länge des Blattfederschenkels 35 nach hinten (in der Fig. nach rechts) ist ausreichend, damit der ihn Deckel 13 auch in hochgeschwenktem Zustand noch elektrisch leitend berühren kann. Diese Ausführungsform mit zwischen der Chipkarte 16 und der Lagerschale 31 'innenliegender Blattfeder' 34 ist besonders vorteilhaft, wenn es darum geht, die Bauteilbreite der Kontaktiervorrichtung möglichst gering zu halten.

Fig. 10 zeigt eine alternative Ausführungsform, bei der das Federelement 34 zwar ebenfalls einen Blattfederschenkel 35 aufweist, der jedoch die nach außen weisende Stanzkante 40 der Lagerschale 31 druckschlüssig kontaktiert und an dieser schleift.

In den beiden Fällen entsprechend den Fig. 9 und 10 kann der Abschnitt 38 des Federelements 34, von dem die jeweilige Blattfeder 35 ausgeht, als eine Art Befestigungsklips ausgebildet sein, mit der er sich an den Kontaktträger 11 anstecken lässt.

Ansonsten besitzt bei beiden Ausführungen der Abschnitt 38 eine untere Kontaktfläche 39 zur druckschlüssigen Beaufschlagung einer elektrisch leitend mit Masse verbundenen Fläche an der in den Fig. 9 und 10 nicht dargestellten Leiterplatte.

## Patentansprüche

1. Kontaktiervorrichtung (10) für eine Chipkarte (16), insbesondere für eine SIM-Karte zur Verwendung in Mobiltelefonen, mit einem Kontaktträger (11) aus Kunststoff, der mit Leitern einer im Gerät vorgesehenen Leiterplatte (33) verbindbare Kontakte trägt, sowie mit einem mit dem Kontaktträger (11) schwenkbar verbundenen metallischen Deckel (13), **dadurch gekennzeichnet, dass** am Deckel (13) im wesentlichen U-förmige Lagerschalen (31) werkstoffeinheitlich-stoffschlüssig angeformt sind, die mit korrespondierenden Lagerzapfen (30) des Kontaktträgers (11) Schwenklager bildend zusammenwirken.

2. Kontaktiervorrichtung nach Anspruch 1, **dadurch gekennzeichnet, dass** die Lagerschalen (31) aus dem Blech des Deckels (13) ausgestanzt sind.

3. Kontaktiervorrichtung nach Anspruch 1 oder 2, **dadurch gekennzeichnet, dass** die Lagerzapfen (30) dem Kontaktträger (11) werkstoffeinheitlich-stoffschlüssig angeformt, insbes. angespritzt sind.

4. Kontaktiervorrichtung nach einem der Ansprüche 1 bis 3, **dadurch gekennzeichnet, dass** die Lagezapfen (30) an den Längsseiten des Kontaktträgers (11) nach außen weisend angeordnet sind.

5. Kontaktiervorrichtung nach Anspruch 1, **dadurch gekennzeichnet, dass** die im wesentlichen U-förmigen Lagerschalen (31) als offene Lagerschalen mit einem Umfangswinkel von geringfügig mehr als 180° ausgebildet sind.

6. Kontaktiervorrichtung nach einem der Ansprüche 1 bis 5, **dadurch gekennzeichnet, dass** die Lagerschalen (31) auf die Lagerzapfen (30) aufrastbar sind.

7. Kontaktiervorrichtung nach Anspruch 1, **dadurch gekennzeichnet, dass** die im wesentlichen U-förmigen Lagerschalen (31) als offene Lagerschalen mit einem Umfangswinkel von weniger als 180° gestaltet sind.

8. Kontaktiervorrichtung nach Anspruch 1 oder einem der folgenden, **dadurch gekennzeichnet, dass** sich die Lagerschalen (31) mit ihren äußeren Flächen auf der Leiterplatte (33) abstützen.

9. Kontaktiervorrichtung nach Anspruch 1, **dadurch gekennzeichnet, dass** sich bei Überschreiten eines zulässigen Öffnungswinkels des Deckels (13) die Gelenkverbindung selbsttätig löst (Überlastschutz).

10. Kontaktiervorrichtung nach Anspruch 1, **dadurch gekennzeichnet, dass** der Deckel (13) einen Anschlag für die SIM-Karte aufweist, der durch eine am Deckel (13) vorgesehene Abkantung (32) ausgebildet ist.

11. Kontaktiervorrichtung nach Anspruch 10, **dadurch gekennzeichnet, dass** die Abkantung (32) beim Öffnen des Deckels (13) über einen Winkel von etwa 70° mit der Leiterplatte (33) kollidiert.

12. Kontaktiervorrichtung nach einem der Ansprüche 9 bis 11, **dadurch gekennzeichnet, dass** bei Überlast die Lagerschalen (31) im elastischen Bereich leicht aufgeweitet und ohne Zerstörung bzw. Abbrechen der Lagerzapfen (30) das Lösen des Deckels (13) erfolgt.

13. Kontaktiervorrichtung nach Anspruch 1, **gekennzeichnet durch** einen ESD-Abgriff, wobei ein zur druckschlüssigen Beaufschlagung einer elektrisch leitend mit Masse verbundenen Fläche an der Leiterplatte bestimmtes Federelement wie Blattfeder (34) mit einem Schenkel (35) an der inneren Stanzkante (36) einer zur Lagerschale (31) des Deckels (13) hinführenden ausgestanzten Zunge (37) einer Lagerschale (31) schleift.

14. Kontaktiervorrichtung nach Anspruch 13, **dadurch gekennzeichnet, dass** die Länge des Blattfederschenkels (35) so bemessen ist, dass der Deckel (13) ihn auch in hochgeschwenktem Zustand noch elektrisch leitend berühren kann.

15. Kontaktiervorrichtung nach Anspruch 1, **gekennzeichnet durch** einen ESD-Abgriff, wobei ein zur druckschlüssigen Beaufschlagung einer elektrisch leitend mit Masse verbundenen Fläche an der Leiterplatte bestimmtes Federelement wie Blattfeder (34) mit einem Schenkel (35) an einer nach außen weisenden Stanzkante (40) der Lagerschale (31) des Deckels (13) diese druckschlüssig kontaktiert und an dieser schleift.

16. Kontaktiervorrichtung nach einem der Ansprüche 12 bis 15, **dadurch gekennzeichnet, dass** ein Abschnitt (38) des Federelements (34), von dem die jeweilige Blattfeder (35) ausgeht, nach Art eines Befestigungsklips ausgebildet ist, mit der er sich an den Kontaktträger (11) anstecken lässt.

17. Kontaktiervorrichtung nach einem der Ansprüche 12 bis 15, **dadurch gekennzeichnet, dass** der Abschnitt (38) eine untere Kontaktfläche (39) zur druckschlüssigen Beaufschlagung einer elektrisch leitend mit Masse verbundenen Fläche an der Leiterplatte aufweist.
